# EUROPEAN PATENT SPECIFICATION

(11) **EP 3 605 535 B1**
(45) Date of publication and mention of the grant of the patent: **27.08.2025**
(21) Application number: 17903325.3
(22) Date of filing: 21.09.2017
(51) Int. Cl.: G10L 21/0208, G10L 21/0216, G10L 15/20, H04R 3/02

(54) **AUDIO DEVICE**
AUDIOVORRICHTUNG
DISPOSITIF AUDIO

(30) Priority: 28.03.2017 JP 2017063309
(43) Date of publication of application: 05.02.2020
(73) Proprietor: D&M Holdings Inc., Kawasaki-shi Kanagawa 210-8569 (JP)
(72) Inventor: MATSUNAGA Keishi, Kawasaki-shi Kanagawa 210-8569 (JP)
(74) Representative: Mewburn Ellis LLP
(86) International application number: PCT/JP2017/034012
(87) International publication number: WO 2018/179506

(56) References cited:
- WO-A1-2016/024345
- JP-A- 2000 354 300
- JP-A- 2005 318 636
- JP-A- 2009 017 331
- JP-A- 2009 216 835
- KOGA, KENTARO ET AL.: "Improvement of In-Car Speech Recognition by Acoustic Echo Canceller with Maximum Likelihood", 15TH WORLD CONGRESS ON ITS, November 2008 (2008-11-01), pages 1 - 4, XP055541322

## Description

### Technical Field

The present invention relates to an audio device having a function of receiving a voice operation.

### Background Art

In JP 2000-354300 A, there is disclosed a multi-channel audio device configured to execute multi-channel audio reproduction by using a plurality of speakers. The multi-channel audio device collects, for each speaker, sound of a test signal output from the speaker by a microphone installed at a listening position of a user, and measures a delay time and attenuation rate of that sound, to thereby set an output characteristic (delay time and acoustic characteristic) of each speaker so that an audio signal output from each speaker becomes optimal at the listening position of the user.

Further, in JP 2014-219614 A, there is disclosed an audio device having a function of receiving a voice operation. With this audio device, the user can select a piece of music or adjust a volume level, for example, by voice, and thus its usability is improved.

Further, in JP 2006-14359 A, there is disclosed an echo canceller configured to cancel an echo that occurs due to collection of sound of an audio signal output from a speaker by a microphone in, for example, a voice call. This echo canceller analyzes a correlation between an audio signal output from the speaker and a sound signal collected by the microphone, and calculates the amount of delay of a diffracted signal, which is output from the speaker to the microphone in a diffracted manner. Then, the echo canceller generates a delay signal by delaying the audio signal output from the speaker by that amount of delay, and uses the delay signal to cancel a diffracted signal contained in the sound signal collected by the microphone.

KOGA, KENTARO et al., "Improvement of In-Car Speech Recognition by Acoustic Echo Canceller with Maximum Likelihood", 15th World Congress on ITS, (20081100), pages 1 - 4, XP055541322 [Y] 1-4 refers to improvements of in-car speech recognition by acoustic echo canceller with maximum likelihood.

### Summary of Invention

### Technical Problem

In recent years, such a multi-channel audio device as described in JP 2000-354300 A has also been required to have such a function of receiving a voice operation as described in JP 2014-219614 A. However, when the function of receiving a voice operation is added to the multi-channel audio device, the following problem occurs. Specifically, when a voice operation is received during multi-channel audio reproduction, audio signals output from a plurality of speakers reach the microphone in a diffracted manner, and sounds of those audio signals are collected by the microphone as diffracted signals together with a voice signal for the voice operation received from the user. As a result, the voice recognition rate of the voice signal for the voice operation may decrease, resulting in a failure to receive the voice operation.

It is also conceivable that the echo canceller described in JP 2006-14359 A is used to cancel, from a sound signal collected by the microphone, diffracted signals that are output from the plurality of speakers to the microphone in a diffracted manner. However, this echo canceller analyzes, for each of the plurality of speakers, a correlation between an audio signal output from the speaker and a sound signal collected by the microphone, calculates the amount of delay of a diffracted signal that is output from the speaker to the microphone in a diffracted manner, generates a delay signal by delaying the audio signal output from the speaker by that amount of delay, and uses the delay signal to cancel a diffracted signal contained in the sound signal collected by the microphone. A large processing capability is required to implement this processing in real time, resulting in an increase in cost.

The present invention has been made in view of the above-mentioned circumstances, and has an object to provide an audio device capable of receiving a voice operation more reliably even during audio reproduction.

### Solution to Problem

In order to solve the above-mentioned problems, the present invention provides an audio device having a function of receiving a voice operation, as set forth in appended claim 1.

### Advantageous Effects of Invention

According to the present invention, the sound of the test signal output from the speaker is collected by the voice operation reception microphone and the echo back parameter is determined prior to audio reproduction, thereby being able to filter the sound signal collected by the voice operation reception microphone during audio reproduction with this echo back parameter, and execute voice recognition processing for the filtered sound signal. Thus, it is possible to improve the voice recognition rate of the user during audio reproduction, to thereby receive a voice operation more reliably during audio reproduction.

Further, according to the present invention, the echo back parameter is determined prior to audio reproduction, and thus it is possible to alleviate a processing load during audio reproduction, to thereby suppress an increase in processing capability required to receive a voice operation during audio reproduction.

### Brief Description of Drawings

FIG. 1 is a schematic configuration diagram of a multi-channel audio system 1 according to one embodiment illustrating the present invention defined by appended claim 1.
FIG. 2 is a schematic functional configuration diagram of an audio reproduction device 2.
FIG. 3 is a flow chart for illustrating parameter determination processing to be executed by the audio reproduction device 2.

### Description of Embodiments

Now, one embodiment illustrating the present invention defined by appended claim 1 is described with reference to the accompanying drawings.

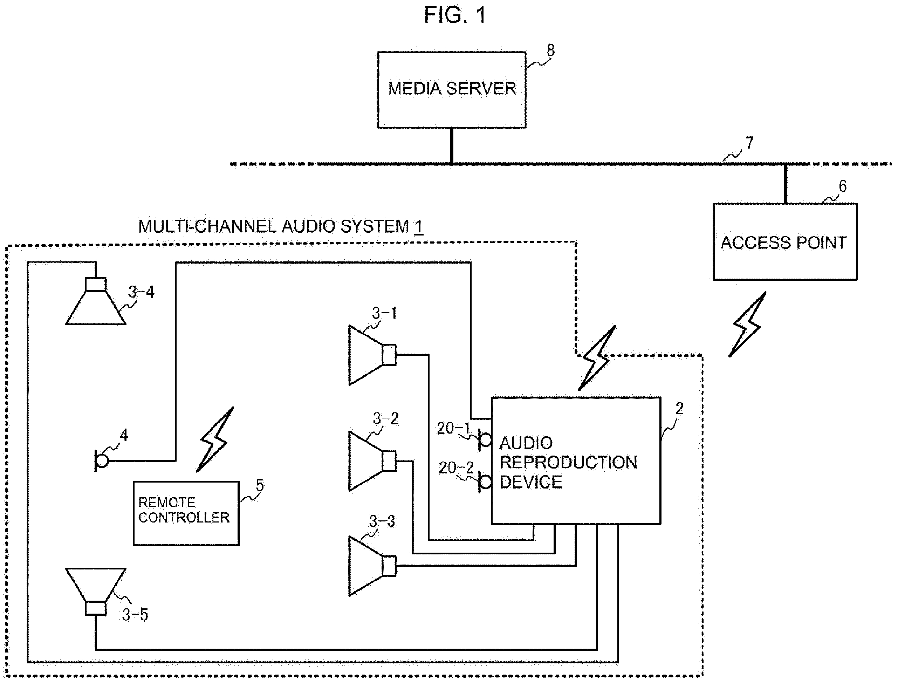

FIG. 1 is a schematic configuration diagram of a multi-channel audio system 1 in this embodiment.

As illustrated in FIG. 1, the multi-channel audio system 1 in this embodiment is connected to a media server 8 via an access point 6 and a network 7 such as a WAN or a LAN. The media server 8 provides the multi-channel audio system 1 with music data supporting multi-channel reproduction.

The multi-channel audio system 1 includes an audio reproduction device 2, a plurality of speakers 3-1 to 3-5 (hereinafter simply referred to as "speaker 3") connected to the audio reproduction device 2, a sound field measurement microphone 4 to be used for measuring a sound field at a listening position of a user, and a remote controller 5 for remotely operating the audio reproduction device 2. The five speakers 3 are illustrated in FIG. 1, but there may be two speakers or four or more speakers 3.

The audio reproduction device 2 includes voice operation reception microphones 20-1 and 20-2 (hereinafter also simply referred to as "voice operation reception microphone 20"), and receives a voice operation by the voice operation reception microphone 20 in addition to a remote operation by the remote controller 5. Then, the audio reproduction device 2 is configured to receive selection of a piece of music data from the user through a remote operation by the remote controller 5 or a voice operation by the voice operation reception microphone 20, and to download the selected piece of music data from the media server 8, to thereby execute multi-channel audio reproduction by using the plurality of speakers 3. In this reproduction, the audio reproduction device 2 is configured to correct an audio signal to be output from each speaker 3 so that the audio signal becomes optimal at the listening position of the user in accordance with an output characteristic parameter of each speaker 3 determined based on the result of measurement of the sound field, which is executed in advance by using the sound field measurement microphone 4.

Further, when measuring the sound field, the audio reproduction device 2 determines an echo back parameter for canceling, from a sound signal collected by the voice operation reception microphone 20, a diffracted signal that is output from each speaker 3 to the voice operation reception microphone 20 in a diffracted manner. Then, during multi-channel audio reproduction, the audio reproduction device 2 is configured to filter the sound signal collected by the voice operation reception microphone 20 in accordance with this echo back parameter, to thereby cancel a diffracted signal contained in the sound signal collected by the voice operation reception microphone 20. As a result, the voice recognition rate of a user voice contained in the sound signal collected by the voice operation reception microphone 20 is improved, and a voice operation can be received even during multi-channel audio reproduction.

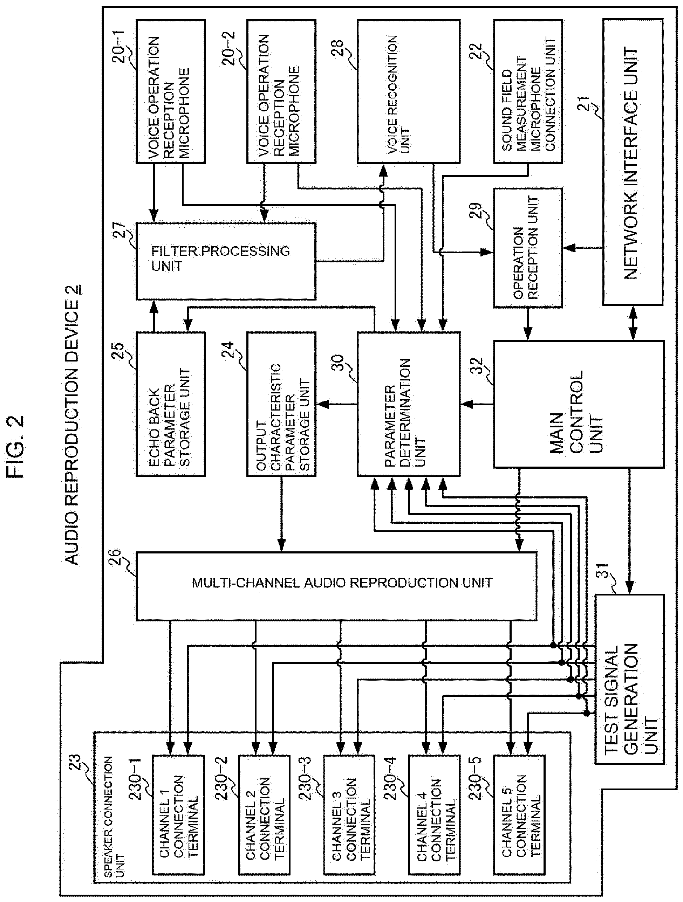

FIG. 2 is a schematic functional configuration diagram of the audio reproduction device 2.

As illustrated in FIG. 2, the audio reproduction device 2 includes the voice operation reception microphones 20-1 and 20-2, which are microphones for receiving a voice operation from the user, a network interface unit 21, a sound field measurement microphone connection unit 22, a speaker connection unit 23, an output characteristic parameter storage unit 24, an echo back parameter storage unit 25, a multi-channel audio reproduction unit 26, a filter processing unit 27, a voice recognition unit 28, an operation reception unit 29, a parameter determination unit 30, a test signal generation unit 31, and a main control unit 32.

The network interface unit 21 is an interface for communicating to/from the remote controller 5 via the access point 6, or communicating to/from the media server 8 via the access point 6 and the network 7.

The sound field measurement microphone connection unit 22 is a connection terminal for connecting to the sound field measurement microphone 4 to be used for measuring the sound field.

The speaker connection unit 23 is an interface for connecting to the speaker 3, and includes a channel 1 connection terminal 230-1 to a channel 5 connection terminal 230-5 (hereinafter also referred to as "channel connection terminal 230") each being a connection terminal for connecting to the speaker 3 corresponding to each channel.

The output characteristic parameter storage unit 24 is configured to store, for each channel, an output characteristic parameter being a parameter for correcting an output characteristic (delay time and acoustic characteristic) of an audio signal to be output from the channel connection terminal 230 corresponding to the channel.

The echo back parameter storage unit 25 is configured to store, for each voice operation reception microphone 20, an echo back parameter for canceling, from a sound signal collected by the voice operation reception microphone 20, a diffracted signal that is output from each speaker 3 to the voice operation reception microphone 20 in a diffracted manner.

The multi-channel audio reproduction unit 26 is configured to reproduce music data supporting multi-channel reproduction as an audio signal for each channel. Then, the multi-channel audio reproduction unit 26 is configured to correct, for each channel, the reproduced audio signal in accordance with the output characteristic parameter of the channel stored in the output characteristic parameter storage unit 24, and to output the corrected audio signal from the channel connection terminal 230 of that channel. As a result, the music data is reproduced by multi-channel audio reproduction.

The filter processing unit 27 is configured to filter, for each voice operation reception microphone 20, the sound signal collected by the voice operation reception microphone 20 in accordance with the echo back parameter of the voice operation reception microphone 20 stored in the echo back parameter storage unit 25, to thereby cancel a diffracted signal contained in the collected sound signal.

The voice recognition unit 28 is configured to execute voice recognition processing for the sound signal collected by the voice operation reception microphone 20, which has been filtered by the filter processing unit 27, to thereby identify a user voice.

The operation reception unit 29 is configured to receive a remote operation by the remote controller 5 via the network interface unit 21, receive a voice operation by the voice operation reception microphone 20 via the filter processing unit 27 and the voice recognition unit 28, or to receives an operation through an operation panel (not shown).

The parameter determination unit 30 is configured to determine an output characteristic parameter for each channel to store the output characteristic parameter into the output characteristic parameter storage unit 24, and to determine an echo back parameter for each voice operation reception microphone 20 to store the echo back parameter into the echo back parameter storage unit 25.

The test signal generation unit 31 is used by the parameter determination unit 30 to determine the output characteristic parameter and the echo back parameter, and is configured to generate a test signal, for example, pink noise, which is output in order from the channel 1 connection terminal 230-1 to the channel 5 connection terminal 230-5.

The main control unit 32 is configured to control the units 20 to 31 of the audio reproduction device 2 in an integrated manner.

Next, a description is given of an operation of the audio reproduction device 2 having the above-mentioned configuration.

### [Multi-Channel Audio Reproduction Processing]

When a piece of music data is selected by a remote operation by the user received from the remote controller 5 via the network interface unit 21, a voice operation by the user received from the voice operation reception microphone 20 via the filter processing unit 27 and the voice recognition unit 28, or an operation by the user through the operation panel (not shown), the operation reception unit 29 notifies the main control unit 32 of the selected piece of music data.

In response to this notification, the main control unit 32 accesses the media server 8 via the network interface unit 21, and downloads the selected piece of music data from the media server 8. Then, the main control unit 32 outputs the downloaded piece of music data to the multi-channel audio reproduction unit 26.

The multi-channel audio reproduction unit 26, which has received the selected piece of music data from the main control unit 32, reproduces the selected piece of music data as an audio signal for each channel. Then, the multi-channel audio reproduction unit 26 corrects, for each channel, the reproduced audio signal so that the audio signal becomes optimal at the listening position of the user in accordance with the output characteristic parameter of the channel stored in the output characteristic parameter storage unit 24, and outputs the corrected audio signal from the channel connection terminal 230 of that channel. As a result, the music data is reproduced by multi-channel audio reproduction.

### [Voice Operation Reception Processing during Multi-Channel Audio Reproduction]

During multi-channel audio reproduction, the filter processing unit 27 is configured to filter, for each voice operation reception microphone 20, the sound signal collected by the voice operation reception microphone 20 in accordance with the echo back parameter of the voice operation reception microphone 20 stored in the echo back parameter storage unit 25. With this filtering, a diffracted signal that is output from each speaker 3 to the voice operation reception microphone 20 in a diffracted manner, and is mixed into the sound signal collected by the voice operation reception microphone 20 is canceled. After that, the filter processing unit 27 outputs the filtered sound signal collected by each voice operation reception microphone 20 to the voice recognition unit 28.

The voice recognition unit 28 is configured to execute voice recognition processing for the sound signal collected by the voice operation reception microphone 20, which has been received from the filter processing unit 27, to thereby identify a user voice. Then, the voice recognition unit 28 gives recognized details of the identified user voice to the operation reception unit 29.

The operation reception unit 29 is configured to determine whether the recognized details of the user voice received from the voice recognition unit 28 indicate a voice operation, and when the recognized details indicate a voice operation, the operation reception unit 29 notifies the main control unit 32 of details of the operation. In response to this notification, the main control unit 32 executes processing in accordance with the details of the operation received from the operation reception unit 29.

### [Parameter Determination Processing]

Parameter determination processing is executed before the multi-channel audio reproduction processing, and involves determining the output characteristic parameter to be used for the multi-channel audio reproduction processing and the echo back parameter to be used for the voice operation reception processing during multi-channel audio reproduction.

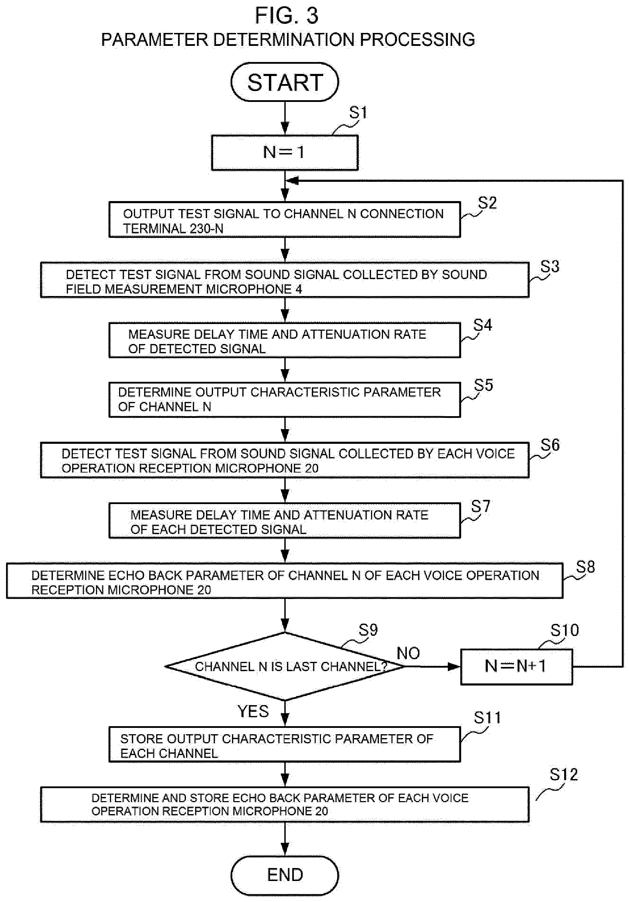

FIG. 3 is a flow chart for illustrating the parameter determination processing to be executed by the audio reproduction device 2. This flow of processing is started by the operation reception unit 29 receiving an instruction to measure the sound field from the remote controller 5 via the network interface unit 21 or the operation panel (not shown) under a state in which the sound field measurement microphone 4 installed at the listening position of the user is connected to the sound field measurement microphone connection unit 22.

First, the main control unit 32 sets a count value N to "1" (Step S1). Then, the main control unit 32 instructs the test signal generation unit 31 to output a test signal to a channel N. In response to this instruction, the test signal generation unit 31 outputs a test signal to a channel N connection terminal 230-N (Step S2). This test signal is output from the speaker 3 connected to the channel N connection terminal 230-N, and is input to the parameter determination unit 30 at the same time.

The test signal output from the speaker 3 connected to the channel N connection terminal 230-N is collected by the sound field measurement microphone 4 connected to the sound field measurement microphone connection unit 22, and is input to the parameter determination unit 30 as the sound signal collected by the sound field measurement microphone 4. When the parameter determination unit 30 has detected a test signal from the sound signal collected by the sound field measurement microphone 4 (Step S3), the parameter determination unit 30 compares the detected signal with the test signal input from the test signal generation unit 31, and measures the delay time and attenuation rate of the detected signal with respect to the test signal as the sound field of the channel N at the listening position of the user (Step S4).

Then, the parameter determination unit 30 is configured to determine, based on the measured sound field of the channel N, the output characteristic parameter (delay time and acoustic characteristic) for correcting an audio signal output from the speaker 3 so that au audio signal output from the speaker 3 of the channel N becomes optimal at the listening position of the user (Step S5).

Further, the test signal output from the speaker 3 connected to the channel N connection terminal 230-N is collected by each of the voice operation reception microphones 20-1 and 20-2, and the collected signals are input to the parameter determination unit 30 as the sound signals collected by the voice operation reception microphones 20-1 and 20-2, respectively. When the parameter determination unit 30 has detected a test signal from the sound signal collected by each of the voice operation reception microphones 20-1 and 20-2 (Step S6), the parameter determination unit 30 compares each of the detected signals with the test signal input from the test signal generation unit 31, and measures the delay time and attenuation rate of each of the detected signals with respect to the test signal (Step S7).

Then, the parameter determination unit 30 is configured to determine, based on the delay time and attenuation rate measured for the voice operation reception microphone 20-1, the echo back parameter (parameter for filtering) of the channel N for canceling, from the sound signal collected by the voice operation reception microphone 20-1, a diffracted signal that is output from the speaker 3 of the channel N to the voice operation reception microphone 20-1 in a diffracted manner. Similarly, the parameter determination unit 30 is configured to determine, based on the delay time and attenuation rate measured for the voice operation reception microphone 20-2, the echo back parameter of the channel N for canceling, from the sound signal collected by the voice operation reception microphone 20-2, a diffracted signal that is output from the speaker 3 of the channel N to the voice operation reception microphone 20-2 in a diffracted manner (Step S8).

Next, the parameter determination unit 30 determines whether the count value N reaches the last channel number (whether the count value N matches the total number of channel connection terminals 230) (Step S9). When the count value N does not reach the last channel number (NO in Step S9), the parameter determination unit 30 increments the count value N by one (Step S10), and the processing returns to Step S2.

On the contrary, when the count value N has reached the last channel number (YES in Step S9), the parameter determination unit 30 stores the determined output characteristic parameters of all the channels into the output characteristic parameter storage unit 24 (Step S11).

Further, the parameter determination unit 30 is configured to integrate the echo back parameters of all the channels determined for the voice operation reception microphone 20-1, and to store the integrated echo back parameters into the echo back parameter storage unit 25 as the echo back parameter of the voice operation reception microphone 20-1. Similarly, the parameter determination unit 30 is configured to integrate the echo back parameters of all the channels determined for the voice operation reception microphone 20-2, and to store the integrated echo back parameters into the echo back parameter storage unit 25 as the echo back parameter of the voice operation reception microphone 20-2 (Step S12).

One embodiment illustrating the present invention defined by appended claim 1 is described above.

In this embodiment, the sound of the test signal output from the speaker 3 is collected by the voice operation reception microphone 20 and the echo back parameter is determined prior to audio reproduction, thereby being able to filter the sound signal collected by the voice operation reception microphone 20 during audio reproduction with the determined echo back parameter, and to execute voice recognition processing for the filtered sound signal. Thus, it is possible to improve the voice recognition rate of the user's voice during audio reproduction, to thereby receive a voice operation more reliably during audio reproduction.

Further, in this embodiment, the echo back parameter can be determined prior to audio reproduction, and thus it is possible to alleviate a processing load during audio reproduction, and suppress an increase in processing capability required to receive a voice operation during audio reproduction.

Further, in this embodiment, a common test signal output from each speaker 3 is used to determine both of the echo back parameter and the output characteristic parameter, and thus work for determining the echo back parameter and work for determining the output characteristic parameter are not required to be performed separately, and thus the usability is improved. Further, both of the echo back parameter and the output characteristic parameter are determined based on the delay time and attenuation rate of the detected signal with respect to the test signal output from the speaker 3, and thus hardware or software that implements the functional block for determining the echo back parameter and the functional block for determining the output characteristic parameter can be used in common, and the cost can be reduced accordingly.

The present invention is defined by appended claim 1 and not limited to the embodiment described above, and various modifications may be made thereto.

For example, in the above-mentioned embodiment, a description has been given of an exemplary case in which the plurality of speakers 3 are employed. However, the present invention is not limited to this configuration. When the speaker 3 is a speaker configured to support multi-channel reproduction, there may be (not in accordance with the claimed invention) only one speaker 3.

Further, in the above-mentioned embodiment, a description has been given of an exemplary case in which there are two voice operation reception microphones 20 (voice operation reception microphones 20-1 and 20-2). However, there may be one voice operation reception microphone 20 or three or more voice operation reception microphones 20. Further, the voice operation reception microphone 20 maybe incorporated in the audio reproduction device 2, or may be provided as an external component, wherein the voice operation reception microphone 20 is comprised in the audio device according to the claimed invention.

Further, in the above-mentioned embodiment, a description has been given of an exemplary case in which music data is downloaded from the media server 8 and is reproduced. However, the present invention is not limited thereto. For example, the audio reproduction device 2 may include a music data storage unit configured to store music data or a music data reading unit configured to read music data from media storing music data, and music data may be acquired from the music data storage unit or from media via the music data reading unit to be reproduced.

Further, in the above-mentioned embodiment, the functional configuration of the audio device 2 illustrated in FIG. 2 may be implemented by hardware through use of an integrated logic IC such as an application specific integrated circuit (ASIC) or a field programmable gate array (FPGA), or may be implemented by software through use of a computer, for example, a digital signal processor (DSP). Alternatively, the functional configuration may be implemented by a general computer, for example, a PC, including a CPU, a memory, a flash memory, an auxiliary storage device, for example, a hard disk drive, a communication device, for example, a wireless LAN adaptor, and a speaker, causing the CPU to load a predetermined program into the memory from the auxiliary storage device and execute the program.

### Reference Signs List

1: multi-channel audio system, 2: audio reproduction device, 3, 3-1 to 3-5: speaker, 4: sound fieldmeasurement microphone, 5: remote controller, 6: access point, 7: network, 8: media server, 20, 20-1, 20-2: voice operation reception microphone, 21: network interface unit, 22: sound field measurement microphone connection unit, 23: speaker connection unit, 24: output characteristic parameter storage unit, 25: echo back parameter storage unit, 26: multi-channel audio reproduction unit, 27: filter processing unit, 28: voice recognition unit, 29: operation reception unit, 30: parameter determination unit, 31: test signal generation unit, 32: main control unit, 230, 230-1 to 230-5: channel connection terminal

## Claims

1. An audio device having a function of receiving a voice operation, the audio device comprising:
audio reproduction means (26) for reproducing an audio signal to output the audio signal to a speaker (3-1 to 3-5);
a voice operation reception microphone (20-1, 20-2) configured to receive a voice operation from a user;
parameter determination means (30) for determining an echo back parameter for canceling a diffracted signal that is output from the speaker (3-1 to 3-5) to the voice operation reception microphone (20-1, 20-2) in a diffracted manner during audio reproduction;
filter processing means (27) for filtering a sound signal collected by the voice operation reception microphone (20-1, 20-2) during audio reproduction with the echo back parameter determined by the parameter determination means (30); and
voice operation reception means (28) for executing voice recognition processing for the collected sound signal filtered by the filter processing means (27) to receive the voice operation,
wherein the parameter determination means (30) is configured to:
output a test signal from the speaker (3-1 to 3-5);
collect the test signal by the voice operation reception microphone (20-1, 20-2); and
determine the echo back parameter based on a first delay time and a first attenuation rate of the sound signal collected by the voice operation reception microphone (20-1, 20-2) with respect to the test signal,
wherein the audio reproduction means (26) is configured to reproduce a multi-channel audio signal to output the multi-channel audio signal from a plurality of speakers (3-1 to 3-5), and
wherein the parameter determination means (30) is configured to:
output the test signal from the plurality of speakers (3-1 to 3-5) in order;
collect the test signal by the voice operation reception microphone (20-1, 20-2);
measure, for each speaker (3-1 to 3-5), the first delay time and first attenuation rate of the sound signal collected by the voice operation reception microphone (20-1, 20-2) with respect to the test signal;
determine the echo back parameter based on the first delay time and first attenuation rate measured for each speaker (3-1 to 3-5);
wherein the audio device is **characterized in that**:
the audio device further comprises a sound field measurement microphone,
wherein the parameter determination means (30) is configured to:
collect the test signal, which is output from the plurality of speakers (3-1 to 3-5) in order, by the sound field measurement microphone installed at a listening position of the user, when determining the echo back parameter;
measure, for each speaker (3-1 to 3-5), a second delay time and second attenuation rate of the sound signal collected by the sound field measurement microphone with respect to the test signal; and
determine an output characteristic parameter of each speaker (3-1 to 3-5) based on the second delay time and second attenuation rate measured for each speaker (3-1 to 3-5), and
wherein the audio reproduction means (26) is configured to correct, for each speaker (3-1 to 3-5), an audio signal to be output from each speaker (3-1 to 3-5) in accordance with the output characteristic parameter of the each speaker (3-1 to 3-5) determined by the parameter determination means (30).

## Patentansprüche

1. Audiovorrichtung mit einer Funktion zum Empfangen einer Sprachsteuerung, wobei die Audiovorrichtung Folgendes umfasst:
ein Audiowiedergabemittel (26) zur Wiedergabe eines Audiosignals zur Ausgabe des Audiosignals an einen Lautsprecher (3-1 bis 3-5);
ein Sprachsteuerungsempfangsmikrofon (20-1, 20-2), das ausgelegt ist, eine Sprachsteuerung von einem Benutzer zu empfangen;
ein Parameterbestimmungsmittel (30) zur Bestimmung eines Nachhallparameters zur Unterdrückung eines gebeugten Signals, das während der Audiowiedergabe vom Lautsprecher (3-1 bis 3-5) an das Sprachsteuerungsempfangsmikrofon (20-1, 20-2) auf gebeugte Weise ausgegeben wird;
ein Filterverarbeitungsmittel (27) zum Filtern eines Schallsignals, das vom Sprachsteuerungsempfangsmikrofon (20-1, 20-2) während der Audiowiedergabe aufgefangen wird, mit dem Nachhallparameter, der durch das Parameterbestimmungsmittel (30) bestimmt wird; und
ein Sprachsteuerungsempfangsmittel (28) zum Ausführen einer Spracherkennungsverarbeitung für das aufgefangene Schallsignal, das durch das Filterverarbeitungsmittel (27) gefiltert wurde, um die Sprachsteuerung zu empfangen,
wobei das Parameterbestimmungsmittel (30) ausgelegt ist, um:
ein Testsignal vom Lautsprecher (3-1 bis 3-5) auszugeben;
das Testsignal durch das Sprachsteuerungsempfangsmikrofon (20-1, 20-2) aufzufangen; und
den Nachhallparameter basierend auf einer ersten Verzögerungszeit und einer ersten Dämpfungsrate des Schallsignals, das vom Sprachsteuerungsempfangsmikrofon (20-1, 20-2) aufgefangen wird, in Bezug auf das Testsignal zu bestimmen,
wobei das Audiowiedergabemittel (26) ausgelegt ist, ein Mehrkanal-Audiosignal wiederzugeben, um das Mehrkanal-Audiosignal von einer Vielzahl von Lautsprechern (3-1 bis 3-5) auszugeben, und
wobei das Parameterbestimmungsmittel (30) ausgelegt ist, um:
das Testsignal von der Vielzahl von Lautsprechern (3-1 bis 3-5) nacheinander auszugeben;
das Testsignal durch das Sprachsteuerungsempfangsmikrofon (20-1, 20-2) aufzufangen;
für jeden Lautsprecher (3-1 bis 3-5) die erste Verzögerungszeit und die erste Dämpfungsrate des Schallsignals, das vom Sprachsteuerungsempfangsmikrofon (20-1, 20-2) aufgefangen wurde, in Bezug auf das Testsignal zu messen;
den Nachhallparameter basierend auf der ersten Verzögerungszeit und der ersten Dämpfungsrate zu bestimmen, die für jeden Lautsprecher (3-1 bis 3-5) gemessen wurden;
wobei die Audiovorrichtung **dadurch gekennzeichnet, dass**:
die Audiovorrichtung weiters ein Schallfeldmessmikrofon umfasst,
wobei das Parameterbestimmungsmittel (30) ausgelegt ist, um:
das Testsignal, das von der Vielzahl von Lautsprechern (3-1, 3-5) nacheinander ausgegeben wird, durch das Schallfeldmessmikrofon aufzufangen, das an einer Hörposition des Benutzers installiert ist, wenn der Nachhallparameter bestimmt wird;
für jeden Lautsprecher (3-1 bis 3-5) eine zweite Verzögerungszeit und eine zweite Dämpfungsrate des Schallsignals, das vom Schallfeldmessmikrofon aufgefangen wurde, in Bezug auf das Testsignal zu messen; und
einen Ausgabemerkmalparameter jedes Lautsprechers (3-1 bis 3-5) basierend auf der zweiten Verzögerungszeit und der zweiten Dämpfungsrate, die für jeden Lautsprecher (3-1 bis 3-5) gemessen wurde, zu bestimmen und
wobei das Audiowiedergabemittel (26) ausgelegt ist, für jeden Lautsprecher (3-1 bis 3-5) ein Audiosignal, das von jedem Lautsprecher (3-1 bis 3-5) ausgegeben werden soll, in Übereinstimmung mit dem Ausgabemerkmalparameter jedes Lautsprechers (3-1 bis 3-5), das durch das Parameterbestimmungsmittel (30) bestimmt wurde, zu korrigieren.

## Revendications

1. Dispositif audio présentant une fonction de réception d'une opération vocale, le dispositif audio comprenant :
des moyens de reproduction audio (26) pour reproduire un signal audio afin de délivrer en sortie le signal audio vers un haut-parleur (3-1 à 3-5) ;
un microphone de réception d'opération vocale (20-1, 20-2) configuré pour recevoir une opération vocale de la part d'un utilisateur ;
des moyens de détermination de paramètre (30) pour déterminer un paramètre de retour d'écho pour annuler un signal diffracté qui est délivré en sortie par le haut-parleur (3-1 à 3-5) vers le microphone de réception d'opération vocale (20-1, 20-2) d'une manière diffractée pendant une reproduction audio ;
des moyens de traitement de filtre (27) pour filtrer un signal sonore collecté par le microphone de réception d'opération vocale (20-1, 20-2) pendant une reproduction audio avec le paramètre de retour d'écho déterminé par les moyens de détermination de paramètre (30) ; et
des moyens de réception d'opération vocale (28) pour exécuter un traitement de reconnaissance vocale pour le signal sonore collecté filtré par les moyens de traitement de filtre (27) pour recevoir l'opération vocale,
dans lequel les moyens de détermination de paramètre (30) sont configurés pour :
délivrer en sortie un signal de test à partir du haut-parleur (3-1 à 3-5) ;
collecter le signal de test par l'intermédiaire du microphone de réception d'opération vocale (20-1, 20-2) ; et
déterminer le paramètre de retour d'écho sur la base d'un premier temps de retard et d'un premier taux d'atténuation du signal sonore collecté par le microphone de réception d'opération vocale (20-1, 20-2) par rapport au signal de test,
dans lequel les moyens de reproduction audio (26) sont configurés pour reproduire un signal audio multicanal afin de délivrer en sortie le signal audio multicanal à partir d'une pluralité de haut-parleurs (3-1 à 3-5), et
dans lequel les moyens de détermination de paramètre (30) sont configurés pour :
délivrer en sortie le signal de test à partir de la pluralité de haut-parleurs (3-1 à 3-5) dans l'ordre ;
collecter le signal de test par l'intermédiaire du microphone de réception d'opération vocale (20-1, 20-2) ;
mesurer, pour chaque haut-parleur (3-1 à 3-5), le premier temps de retard et le premier taux d'atténuation du signal sonore collecté par le microphone de réception d'opération vocale (20-1, 20-2) par rapport au signal de test ;
déterminer le paramètre de retour d'écho sur la base du premier temps de retard et du premier taux d'atténuation mesurés pour chaque haut-parleur (3-1 à 3-5) ;
dans lequel le dispositif audio est **caractérisé en ce que** :
le dispositif audio comprend en outre un microphone de mesure de champ sonore,
dans lequel les moyens de détermination de paramètre (30) sont configurés pour :
collecter le signal de test, qui est délivré en sortie par la pluralité de haut-parleurs (3-1 à 3-5) dans l'ordre, par l'intermédiaire du microphone de mesure de champ sonore installé dans une position d'écoute de l'utilisateur, lors de la détermination du paramètre de retour d'écho ;
mesurer, pour chaque haut-parleur (3-1 à 3-5), un second temps de retard et un second taux d'atténuation du signal sonore collectés par le microphone de mesure de champ sonore par rapport au signal de test ; et
déterminer un paramètre caractéristique de sortie de chaque haut-parleur (3-1 à 3-5) sur la base du second temps de retard et du second taux d'atténuation mesurés pour chaque haut-parleur (3-1 à 3-5), et
dans lequel les moyens de reproduction audio (26) sont configurés pour corriger, pour chaque haut-parleur (3-1 à 3-5), un signal audio devant être délivré en sortie par chaque haut-parleur (3-1 à 3-5) conformément au paramètre de caractéristique délivré en sortie de chaque haut-parleur (3-1 à 3-5) déterminé par les moyens de détermination de paramètre (30).
